# EUROPEAN PATENT SPECIFICATION

(11) **EP 1 604 363 B1**
(45) Date of publication and mention of the grant of the patent: **27.06.2012**
(21) Application number: 04714505.7
(22) Date of filing: 25.02.2004
(51) Int. Cl.: G11B 27/10, H04N 9/82

(54) **METHOD OF REPRODUCING CONTENT INFORMATION AND INTERACTIVE OPTICAL DISC REPRODUCING APPARATUS**
VERFAHREN ZUR WIEDERGABE VON INHALTSINFORMATIONEN UND WIEDERGABEVORRICHTUNG FÜR INTERAKTIVE OPTISCHE DATENTRÄGER
PROCEDE DE LECTURE D'INFORMATIONS DE CONTENU ET APPAREIL POUR LA REPRODUCTION DE DISQUE OPTIQUE INTERACTIF

(30) Priority: 25.02.2003 KR 2003011717; 11.06.2003 KR 2003037447
(43) Date of publication of application: 14.12.2005
(73) Proprietor: LG Electronics Inc., Seoul 150-010 (KR)
(72) Inventor: YOON, Woo Seong, Namyangjoo-si, Kyonggi-do 472-744 (KR); YOO, Jea Yong, Seoul 135-270 (KR); ALEXANDRE, Limonov, Seoul 137-784 (KR)
(74) Representative: Vossius & Partner
(86) International application number: PCT/KR2004/000385
(87) International publication number: WO 2004/077434

(56) References cited:
- WO-A-2004/044761
- WO-A-2004/046847
- JP-A- 10 136 314
- JP-A- 11 098 467
- US-A1- 2002 078 144
- US-A1- 2003 005 161
- US-A1- 2003 161 615
- US-A1- 2003 215 224
- BUGAI S ET AL: "Synchronised Multimedia Integration Language" W3C WORKING DRAFT, XX, XX, 2 February 1998 (1998-02-02), pages 1-29, XP002275957

## Description

### 1. TECHNICAL FIELD

The present invention relates to a method of reproducing content information for an interactive optical disc apparatus. More specifically, the present invention enables various audio content data associated with video data read out from an optical disc such as an IDVD (Interactive Digital Versatile Disc) to be reproduced synchronously.

### 2. BACKGROUND ART

High-density optical discs capable of recording massive digital data, for example, DVDs are in widespread use. DVDs are being commercialized as a high-capacity recording medium capable of recording high-quality video data for many hours as well as digital audio data.

DVDs include a navigation data recording section for recording navigation data needed for play control of said video data and a data stream recording section for recording digital data streams such as said video data.

When a DVD is inserted into a DVD player and successfully loaded, a common DVD player reads out navigation data recorded in said navigation data recording section and stores the navigation data in a memory within the. Thereafter, by using the navigation data, the DVD player carries out DVD playback operations whereby video data recorded in said data stream recording section can be read out and played.

Accordingly, an owner of said DVD player can not only play and watch high-quality video data recorded in said DVD for many hours, but also select and use various functions provided by said DVD.

IDVDs are a recent development. An IDVD includes detailed information about A/V data read out and played from said DVD. The A/V data and detailed information can be recorded by various protocols such as a mark-up language (XHTML or SMIL), a cascading style sheet (CSS), and scripting language (ECMAScript); and data type content such as image (JPEG or PNG), audio (AC-3, MPEG audio, DTS, or SDDS), animation (MNG), and text/fonts; and how the contents are read out and played through user interfaces such as the DVD player. With the IDVD as described above, a user can easily search for content information of various types associated with said main A/V data. In other words, while reproducing main A/V data recorded in an IDVD, contents of various types are provided from content providing servers, e.g., servers connected through the Internet. The contents of various types are reproduced after synchronization with the main A/V data.

However, there is a need in the art for a method and apparatus for re-synchronization of external content information with the main A/V data when there is a temporary disconnection or delay of transmission of content information due to a network connection loss or limited storage of a buffer memory contained in an interactive optical disc apparatus. Also, there is a need for a method and apparatus for re-synchronization in a case when A/V data read out from said interactive DVD and content information are not synchronized with each other.

### 3. DISCLOSURE OF INVENTION

By taking said situation into account, the present invention is directed to provide a means of reproducing content information for an interactive optical disc apparatus. More specifically, the present invention provides a means of reproducing various audio content data associated with video data read out from an optical disc such as an interactive DVD in synchronization with said video data. When synchronization failure occurs during synchronized reproduction with said video data, an offset value of audio content data capable of re-synchronization thereafter is calculated, after which audio content data corresponding to the offset value are either provided by a content providing server or read out from the optical disc, thereby reproduced in re-synchronization with said video data.

To achieve said objective, a method of reproducing content information for an interactive optical disc according to the present invention comprises : reproducing video data read out from an interactive optical disc in synchronization with audio content data downloaded from a content providing server connected through the Internet ; in case of disconnection or delay of transmission of said audio content data, calculating an offset value of audio content data capable of re-synchronization based on play time of video data read out from said interactive optical disc and bit rate of said audio content data; and sending a command requesting transmission of audio content data corresponding to said calculated offset value to said content providing server, thereby re-synchronizing audio content data transmitted in response to said command with said video data read out from said interactive optical disc.

Another method of reproducing content information for an interactive optical disc apparatus according to the present invention comprises: reproducing video data and audio content data recorded separately in an interactive optical disc in synchronization with each other; in case of failure of said synchronization, calculating an offset value of audio content data capable of re-synchronization based on play time of said video data and bit rate of said audio content data; and after searching for audio content data corresponding to the calculated offset value, reproducing the audio content data by re-synchronizing with video data read out from said interactive optical disc.

A further method of reproducing content information for an interactive optical disc apparatus according to the present invention comprises: searching for additional information recorded in a audio content data stream either read out from an interactive optical disc or received from a content providing server, thereby referring thereto; based on said additional information, calculating an offset value for re-synchronization of said audio content data and video data read out from said interactive optical disc; and either searching for and reading out audio content data corresponding to said offset value from said interactive optical disc or requesting and receiving audio content data through an interface to said content providing server, thereby reproducing the audio content data by re-synchronizing with said video data.

### 4. BRIEF DESCRIPTION OF DRAWINGS

The accompanying drawings, which are included to provide a further understanding of the invention, illustrate the preferred embodiments of the invention, and together with the description, serve to explain the principles of the present invention.

In the drawings:
Fig. 1 illustrates the structure of an interactive optical disc apparatus according to the present invention;
Fig. 2 illustrates a conceptual state of reproducing data in an interactive optical disc according to the present invention;
Figs. 3 and 4 illustrate a data transmission/reception process between an interactive optical disc apparatus according to a first embodiment of the present invention and a content providing server and a data reproducing process;
Fig. 5 illustrates a data reproducing process of an interactive optical disc apparatus according to a second embodiment of the present invention; and
Fig. 6 illustrates a data reproducing process of an interactive optical disc apparatus according to a third embodiment of the present invention.

### 5. MODES FOR CARRYING OUT THE INVENTION

Hereinafter, preferred embodiments of the present invention for reproducing content information in an interactive optical disc apparatus will be described in detail with reference to the appended drawings

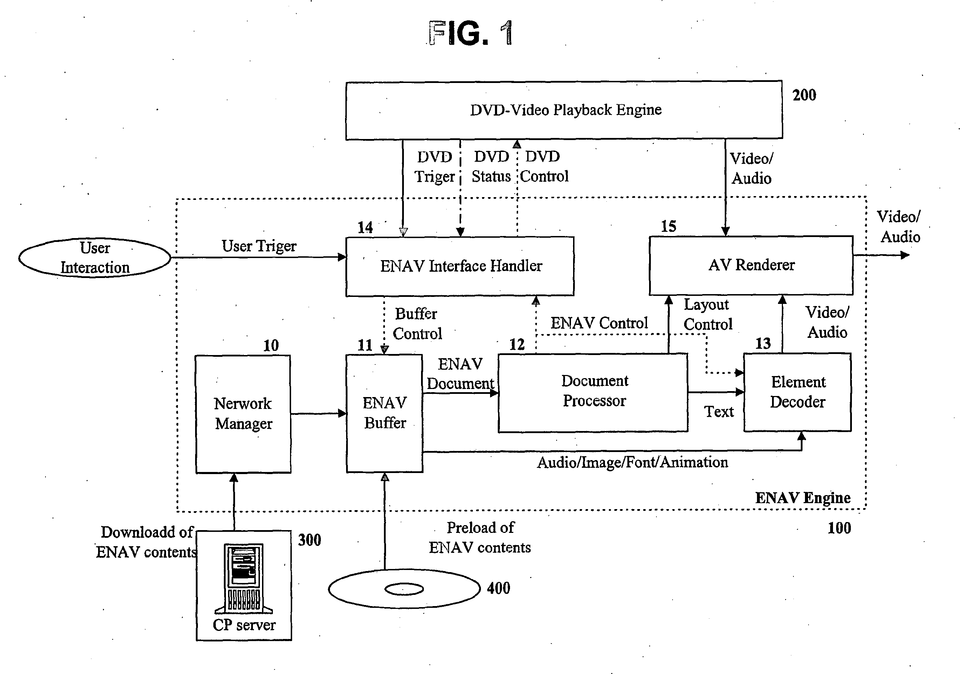

Fig. 1 illustrates the structure of an interactive optical disc apparatus according to the present invention. The said interactive optical disc apparatus, includes an ENAV engine 100, such as an interactive DVD player. The interactive DVD player includes a network manager 10 to download ENAV (Enhanced Navigation) contents from a content providing server 300 connected through a network such as the Internet. The interactive DVD player further comprises an ENAV buffer 11 where preloaded are ENAV contents recorded in an optical disc 400, such as an IDVD. The interactive DVD player also includes a document processor 12 receiving ENAV data and carrying out corresponding data processing operations and an element decoder 13 decoding element data such as text, audio, image, fonts, and animation data into video and audio.

An ENAV interface handler 14 carries out operations in response to control signals of the document processor 12 and receives/transmits a user trigger, a DVD trigger, a DVD status, and DVD control signals. The ENAV interface handler 14 also controls the ENAV buffer 11. The interactive DVD player includes an A/V renderer 15 providing an audio and video output.

The said interactive optical disc apparatus also includes a DVD-Video playback engine 200 operating in association with said ENAV engine 100. The content providing server 300 is connected with the network manager 10 of said ENAV engine 100, thus providing various content information. The various ENAV contents data could include an audio data file associated with video data read out from the interactive DVD 400. For example, the audio data could be a soundtrack in a foreign language to accompany the video content stored on the interactive DVD 400.

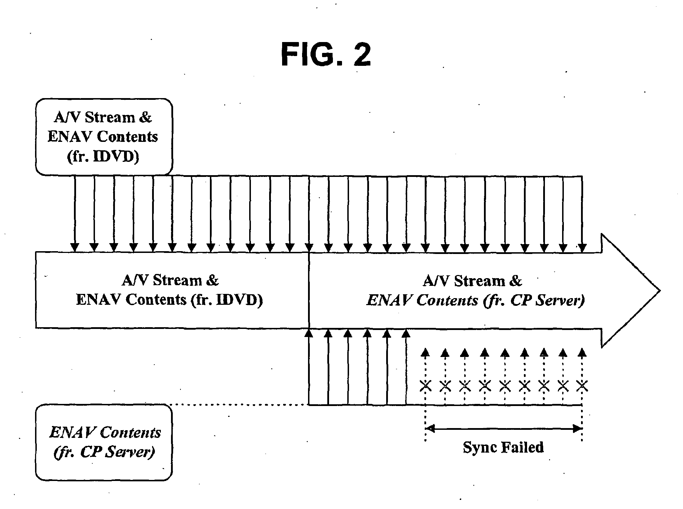

The ENAV buffer 11 can be logically divided into a first buffer (Buffer 1) and a second buffer (Buffer 2). As shown in Fig. 2, main A/V streams read out from said interactive DVD 400 are reproduced in synchronization with ENAV content information, for example audio content data or alternate audio content data provided from said content providing server 300.

Consequently, an owner of said interactive DVD player can watch A/V streams read out from said interactive DVD 400 and/or ENAV audio content data together with ENAV audio content data provided from said content providing server 300.

When audio content data provided from said content providing server 300 are temporarily disconnected or delayed due to a network connection loss on the Internet or limited storage in the buffer memory 11 contained in the interactive DVD player, the ENAV engine 100 carries out a series of operations to re-synchronize video data read out from said interactive DVD 400 with audio content data provided from the content providing server 300. In other words, when a synchronization failure occurs during playback of video data read out from said interactive DVD 400 in synchronization with audio content data, a series of operations for re-synchronization are performed, which are described in detail below.

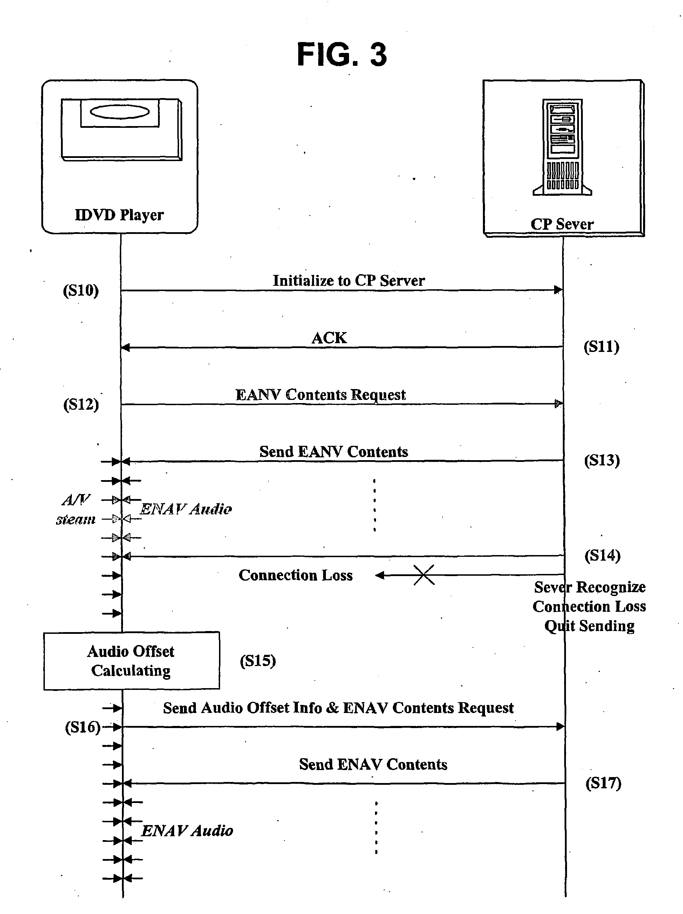

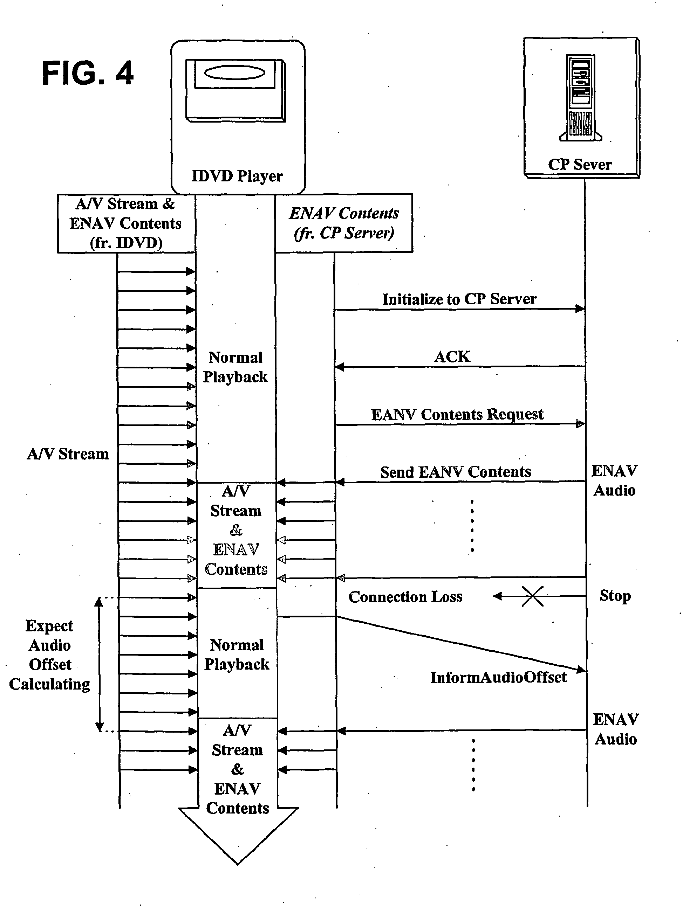

Figs. 3 and 4 illustrate a data transmission/reception process between an interactive optical disc apparatus, according to a first embodiment of the present invention, and a content providing server 300 and a data reproducing process. For example, when a user request or an event prescribed by a script occurs during playback of video data of an interactive DVD 400, the interactive DVD player carries out initial operations for Internet connection S10. Thereafter, said content providing server 300 carries out a series of operations corresponding thereto S11.

Subsequently, said interactive DVD player generates a command requesting transmission of ENAV content information corresponding to current video data. For example, audio content data files associated with current video data are requested by sending a command to said content providing server 300 S12.

The content providing server 300 searches for the audio content data files requested for transmission within a database (not shown). Subsequently, the content providing server 300 transmits the audio content data as ENAV content information S13. The interactive DVD player downloads the audio content data, provided as the ENAV content information, and stores it temporarily into the ENAV buffer 11 described previously with reference to Fig. 1. Thereafter, the interactive DVD player reproduces the audio content data by synchronizing it with the video data read out from the interactive DVD 400.

The content providing server 300 prepares for error handling for possible network connection losses, such as a connection failure of clients on the Internet or a timeout, and thus listens to the connection from clients. When connection loss on said network occurs, transmission of said ENAV content information is stopped S14.

When synchronization of said video data with audio content data fails due to the cancellation of transmission of ENAV content information, the interactive DVD player calculates an offset value for the audio content data capable of re-synchronization by identifying a play time (T1) of video data at that instant, adding a predetermined amount of time (A) to said identified play time of video data and multiplying the result by the bit rate of the audio content data S15. Because the bit rate of said audio content data is a constant bit rate (CBR), the offset value is calculated simply as 'Offset = (T1+A) x CBR'.

The predetermined amount of time (A) can be set as an arbitrary time value proportional to a playback speed of the video data and a data transfer rate on the Internet. The interactive DVD player generates a command requesting transmission of the ENAV content information corresponding to the offset value calculated in said manner, and sends the command to the content providing server 300 S16.

The content providing server 300 refers to the command received through said procedure, and carries out a series of operations to read out and transmit the audio content data corresponding to said offset value S17. The interactive DVD player re-synchronizes the audio content data received through said procedure with the video data read out from said interactive DVD 400, thereby allowing normal synchronized reproduction of the two types of data.

As shown in Fig. 4, the interactive DVD player normally playbacks a main A/V stream read out and played from said interactive DVD 400, along with audio content data received from said content providing server 300 in synchronization.

When operations for synchronized reproduction in said manner are not successful, the interactive DVD player can be provided with audio content data capable of re-synchronization thereafter by the re-transmission from said content providing server, thereby carrying out a series of operations for reproduction re-synchronized with the video data.

In a second embodiment of the present invention, when a user request or event prescribed by a script occurs, the interactive DVD player, in the middle of carrying out a series of operations for normal playback wherein a main A/V stream recorded in an interactive DVD 400 is read out and played, carries out a series of operations for reproducing ENAV audio content data, which was downloaded from IDVD disc 400 and temporarily stored in the buffer 11 of said interactive DVD system, in synchronization with said main A/V stream, such as video data.

When synchronization fails due to limited capacity of the buffer memory 11 during synchronized reproduction in said manner, the interactive DVD player, as described previously, calculates an offset value of the audio content data capable of re-synchronization by identifying the play time of the video data at that instant (T1), adding a predetermined amount of time (A) to said identified play time of video data, and multiplying the result by the bit rate of the audio content data.

Because the bit rate of said audio content data is a constant bit rate (CBR), the offset value is calculated simply as 'Offset = (T1+A) x CBR'. In this case, the predetermined amount of time (A) can be set as an arbitrary value proportional to a playback speed of the video data.

The interactive DVD player, after searching for and reading out audio content data corresponding to said offset value calculated in said manner, normally reproduces the audio content data in re-synchronization with said video data.

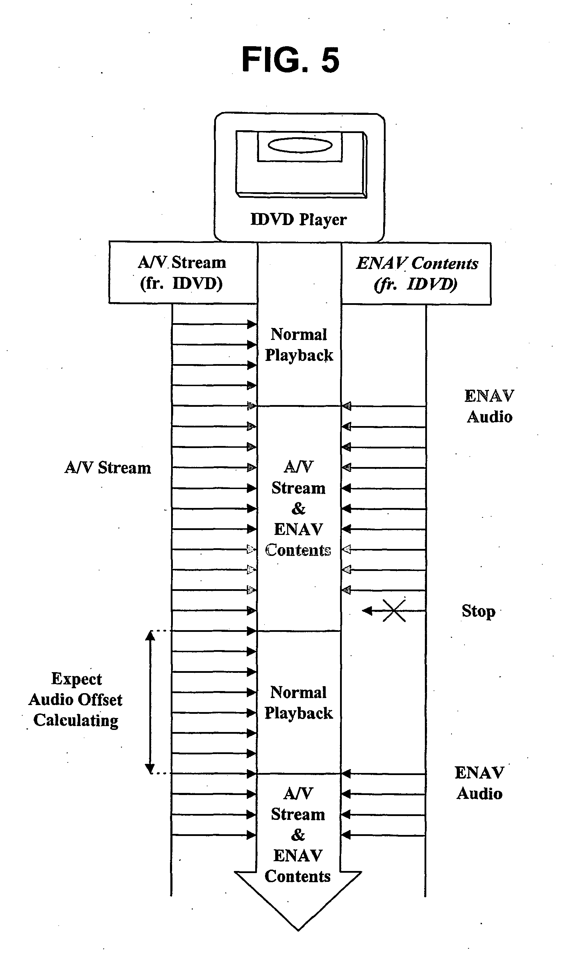

In a third embodiment of the present invention, as described previously with reference to Figs. 4 and 5, an audio content data stream which is transmitted from said content providing server 300 or read out from an interactive DVD can include additional information for re-synchronization between said audio content data and said main A/V stream, such as video data.

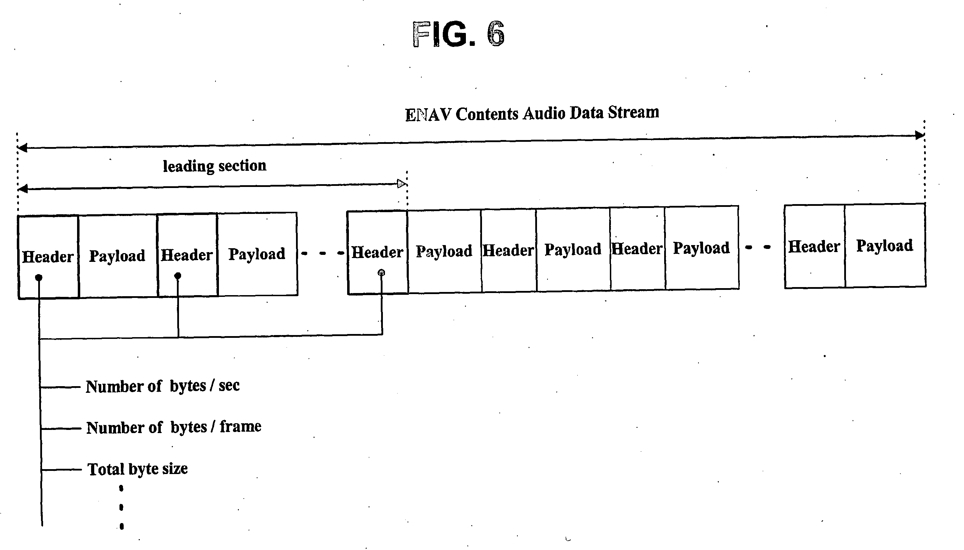

For instance, as shown in Fig. 6, in order to calculate the offset value for re-synchronization with the video data more quickly and precisely, more than one information from among information about the number of bytes of audio data per second, number of bytes of audio data per frame, and total byte size of audio content data can be included in more than one header of a heading section of said audio content data stream.

In addition, the additional information can be included either in the header and/or payload areas of the heading section of said audio content data stream, or intermittently over the entire section of said audio content data stream.

During initial reproduction of the audio content data stream, transmitted from said content providing server 300 or recorded in said interactive DVD 400, the interactive DVD player searches for and refers to, for example, the number of bytes of audio data per second, number of bytes of audio data per frame, and total byte size of audio content data which are included in the header areas of the heading section of said audio content data stream.

When a synchronization failure occurs during playback of video data read out from said interactive DVD 400 in synchronization with said audio content data, an offset value for re-synchronization is calculated with reference to said additional information. To give a numerical example, if the number of bytes of audio data per second were 1 KB/sec; the number of bytes of audio data per frame were 9 KB/frame; and the instant when re-synchronization is needed due to synchronization failure were 100 sec, the offset value calculated for re-synchronization would be 100 KB = 100 sec x 1 KB/sec.

In fact, since audio data is reproduced in units of a frame and the number of bytes per frame is 9 KB, the actual start position of the audio frame wherein the offset value of 100 KB calculated in said manner is located would be 99 KB. Therefore, for this particular case, the interactive DVD player generates a command requesting re-transmission of audio content data starting from the position of 99 KB and sends the command to a content providing server 300.

The said content providing server 300 makes reference to the command received through said procedure and carries out a series of operations to search for and read out the frame start position of audio content data corresponding to said offset value, thereby transmitting corresponding audio content data. The interactive DVD player can then carry out normal reproduction of audio content data received through said procedure by re-synchronizing with video data read out from said interactive DVD 400.

On the other hand, when synchronization failure occurs during reading out and playing said audio content data from an interactive DVD 400, the interactive DVD player searches for and reads out the frame start position of audio content data corresponding to the offset value calculated in said manner from said interactive DVD and carries out normal reproduction by re-synchronizing with said video data.

When the frame start position of the offset value calculated in said manner exceeds the total byte size of said audio content data, the interactive DVD player either decides the offset value to be incorrect and carries out operations again to calculate the offset value, or decides re-synchronization to be impossible and carries out a series of corresponding operations, for example, displaying a notification message to report re-synchronization failure.

The present invention, including the case of synchronization failure due to external causes, can provide a means for normal reproduction in the case of synchronization failure due to intentional disconnection of audio data from video data by a user's selection of trick play function. For example, if a user purposefully skips or changes the play speed in the forward or reverse direction to view the video out of sequence, synchronisation with the content providing server 300 will be lost. Therefore, the present invention calculates the offset value by identifying the time when the trick play is stopped as the re-synchronization time, and re-synchronizes the frame start position of the audio content data with the video data.

A method of reproducing content information for an interactive optical disc apparatus according to the present invention is a very useful invention which enables an owner of an interactive optical disc apparatus to listen to a tremendous variety of audio content data to accompany the video data on an interactive DVD 400, which could not otherwise be stored on the interactive DVD 400 due to space considerations.

The foregoing description of preferred embodiments of the present invention has been presented for purposes of illustration; therefore, the present invention can be applied to rewritable DVDs (DVD-RW, DVD+RW, DVD-RAM) or various information recording media as well as interactive DVDs and those skilled in the art may utilize the invention and various embodiments with improvements, modifications, substitutions, or additions within the scope of the invention as defined by the following appended claims.

## Claims

1. A method of reproducing first data stored on a recording medium in synchronization with second data received from a content providing server over a network, **characterized by** comprising:
sensing a failure in receiving the second data;
upon sensing the failure in receiving the second data, re-synchronizing the first data read out from the recording medium with the second data received from the content providing server over the network by
calculating an offset value for the second data to establish re-synchronization;
sending a command requesting transmission of the second data corresponding to the calculated offset value to the content providing server;
re-synchronizing the second data transmitted in response to the command with the first data read out from the recording medium; and
reproducing the first data in synchronization with the second data,
wherein the first data comprises audio/video data and the second data comprises content data associated with the first data, and
wherein the re-synchronizing step is performed based on information for synchronization or re-synchronization included in a header portion of the second data, the information including data rate information of the second data and/or size information of the second data.

2. The method according to claim 1, wherein the sensing step includes sensing a failure in receiving the second data due to a disconnection or a delay of transmission of the second data over the network.

3. The method according to claim 1, further comprising:
proceeding re-synchronization, wherein during the re-synchronization the first data is reproduced, and the second data is muted and not reproduced.

4. The method according to claim 1, further comprising:
proceeding re-synchronization, wherein during the re-synchronization the first data is reproduced, and a previous segment of the second data is reproduced.

5. The method according to claim 1,
wherein the offset value of the second data capable of re-synchronization is calculated by adding the playing time of the first data to a predetermined amount of time and multiplying the result by the number of bytes per second of the second data, the predetermined amount of time being set as a time value proportional to a playback speed of the first data and a data transfer rate on the network.

6. An apparatus for reproducing content information comprising:
a renderer (15) configured to reproduce first data read out from a recording medium(400)in synchronization with second data received from a content providing server (300) over a network; and
a processor (12) configured to sense a failure in receiving the second data, and upon sensing the failure in receiving the second data, re-synchronize the first data read out from the interactive medium with the second data received from the content providing server (300) over the network, and after a re-synchronization delay, cause said renderer to continue reproducing the first data in synchronization with the second data,
wherein the first data comprises audio/video data and the second data comprises content data associated with the first data, and
wherein the processor (12) is configured to perform the re-synchronization based on information for synchronization or re-synchronization included in a header portion of the second data, the information including data rate information of the second data and/or size information of the second data, by calculating an offset value for the second data to establish re-synchronization; sending a command requesting transmission of the second data corresponding to the calculated offset value to the content providing server (300); and re-synchronizing the second data transmitted in response to the command with the first data read out from the recording medium.

7. The apparatus according to claim 6, wherein the processor (12) is configured to sense a failure in receiving the second data due to a disconnection or a delay of transmission of the second data over the network.

8. The apparatus according to claim 6, wherein the processor (12) is configured to proceed re-synchronization, and control that the first data is reproduced, and the second data is muted and not reproduced, during the re-synchronization delay.

9. The apparatus according to claim 6, wherein said processor (12) is configured to use a playing time of the first data read from the recording medium and the number of bytes per second of the second data, when calculating the offset value,
wherein the offset value of the second data capable of re-synchronization is calculated by adding the playing time of the first data to a predetermined amount of time and multiplying the result by the number of bytes per second of the second data, the predetermined amount of time being set as a time value proportional to a playback speed of the first data and a data transfer rate on the network.

## Patentansprüche

1. Verfahren zur Wiedergabe erster Daten, die auf einem Aufzeichnungsmedium gespeichert sind, synchron mit zweiten Daten, die von einem Inhaltebereitstellungsserver über ein Netzwerk empfangen werden, **dadurch gekennzeichnet, dass** es aufweist:
Erkennen eines Fehlers beim Empfangen der zweiten Daten;
nach Erkennen des Fehlers beim Empfangen der zweiten Daten Neusynchronisieren der ersten Daten, die aus dem Aufzeichnungsmedium ausgelesen werden, mit den zweiten Daten, die von dem Inhaltebereitstellungsserver über das Netzwerk empfangen werden, durch
Berechnen eines Versatzwerts für die zweiten Daten, um die Neusynchronisation herzustellen;
Senden eines Befehls, der die Übertragung der zweiten Daten, die dem berechneten Versatzwert entsprechen, anfordert, an den Inhaltebereitstellungsserver;
Neusynchronisieren der zweiten Daten, die ansprechend auf den Befehl gesendet werden, mit den ersten Daten, die aus dem Aufzeichnungsmedium ausgelesen werden; und
Wiedergeben der ersten Daten synchron mit den zweiten Daten,
wobei die ersten Daten Audio-/Videodaten aufweisen und die zweiten Daten Inhaltsdaten, die zu den ersten Daten gehören, aufweisen, und
wobei der Neusynchronisationsschritt basierend auf Informationen für die Synchronisation oder Neusynchronisation durchgeführt wird, welche in einem Anfangsblockabschnitt der zweiten Daten enthalten sind, wobei die Informationen Datenrateninformationen der zweiten Daten und/oder Größeninformationen der zweiten Daten umfassen.

2. Verfahren nach Anspruch 1, wobei der Erkennungsschritt das Erkennen eines Fehlers beim Empfangen der zweiten Daten aufgrund einer Unterbrechung oder einer Verzögerung der Übertragung der zweiten Daten über das Netzwerk umfasst.

3. Verfahren nach Anspruch 1, das ferner aufweist:
Ausführen der Neusynchronisation, wobei während der Neusynchronisation die ersten Daten wiedergegeben werden, und die zweiten Daten gedämpft und nicht wiedergegeben werden.

4. Verfahren nach Anspruch 1, das ferner aufweist:
Verarbeiten der Neusynchronisation, wobei während der Neusynchronisation die ersten Daten wiedergegeben werden und ein vorhergehender Abschnitt der zweiten Daten wiedergegeben wird.

5. Verfahren nach Anspruch 1,
wobei der Versatzwert der zweiten Daten, der zu einer Neusynchronisation fähig ist, berechnet wird, indem die Abspielzeit der ersten Daten zu einem vorgegebenen Zeitbetrag addiert wird und das Ergebnis mit der Anzahl von Bytes pro Sekunde der zweiten Daten multipliziert wird, wobei der vorgegebene Zeitbetrag als ein Zeitwert festgelegt ist, der proportional zu einer Wiedergabegeschwindigkeit der ersten Daten und einer Datenübertragungsrate auf dem Netzwerk ist.

6. Vorrichtung zur Wiedergabe von Inhaltsinformationen, die aufweist:
eine Umsetzungseinrichtung bzw. einen Renderer (15), der konfiguriert ist, um erste Daten, die aus einem Aufzeichnungsmedium (400) ausgelesen werden, synchron mit zweiten Daten, die von einem Inhaltebereitstellungsserver (300) über ein Netzwerk empfangen werden, wiederzugeben; und
eine Verarbeitungseinrichtung (12), die konfiguriert ist, um einen Fehler beim Empfang der zweiten Daten zu erkennen, und nach der Erkennung des Fehlers beim Empfang der zweiten Daten die ersten Daten, die aus dem interaktiven Medium ausgelesen werden, mit den zweiten Daten, die von dem Inhaltebereitstellungsserver (300) über das Netzwerk empfangen werden, neu zu synchronisieren, und nach einer Neusynchronisierungsverzögerung zu bewirken, dass der Renderer die Wiedergabe der ersten Daten synchron mit den zweiten Daten wiedergibt,
wobei die ersten Daten Audio-/Videodaten aufweisen und die zweiten Daten Inhaltsdaten, die zu den ersten Daten gehören, aufweisen, und
wobei die Verarbeitungseinrichtung (12) konfiguriert ist, um die Neusynchronisation basierend auf Informationen für die Synchronisation oder Neusynchronisation durchzuführen, die in einem Anfangsblockabschnitt der zweiten Daten enthalten sind, wobei die Informationen Datenrateninformationen über die zweiten Daten und/oder Größeninformationen der zweiten Daten enthalten, indem ein Versatzwert für die zweiten Daten berechnet wird, um die Neusynchronisation herzustellen; wobei ein Befehl, der die Übertragung der zweiten Daten anfordert, die dem berechneten Versatzwert entsprechen, an den Inhaltebereitstellungsserver (300) gesendet wird; und wobei die zweiten Daten, die ansprechend auf den Befehl gesendet werden, mit den ersten Daten, die aus dem Aufzeichnungsmedium ausgelesen werden, neusynchronisiert werden.

7. Vorrichtung nach Anspruch 6, wobei die Verarbeitungseinrichtung (12) konfiguriert ist, um einen Fehler beim Empfangen der zweiten Daten aufgrund einer Unterbrechung oder einer Verzögerung der Übertragung der zweiten Daten über das Netzwerk zu erkennen.

8. Vorrichtung nach Anspruch 6, wobei die Verarbeitungseinrichtung (12) konfiguriert ist, um die Neusynchronisation auszuführen, und derart zu steuern, dass die ersten Daten wiedergegeben werden und die zweiten Daten während der Neusynchronisationsverzögerung gedämpft und nicht wiedergegeben werden.

9. Vorrichtung nach Anspruch 6, wobei die Verarbeitungseinrichtung (12) konfiguriert ist, um eine Abspielzeit der ersten Daten, die aus dem Aufzeichnungsmedium ausgelesen werden, und die Anzahl von Bytes pro Sekunde zu verwenden, wenn sie den Versatzwert berechnet,
wobei der Versatzwert der zweiten Daten, der zu der Neusynchronisation fähig ist, berechnet wird, indem die Abspielzeit der ersten Daten zu einem vorgegebenen Zeitbetrag addiert wird und das Ergebnis mit der Anzahl von Bytes pro Sekunde der zweiten Daten multipliziert wird, wobei der vorgegebene Zeitbetrag als ein Zeitwert festgelegt ist, der proportional zu einer Wiedergabegeschwindigkeit der ersten Daten und einer Datenübertragungsrate auf dem Netzwerk ist.

## Revendications

1. Procédé de reproduction de premières données stockées sur un support d'enregistrement en synchronisation avec des deuxièmes données reçues d'un serveur fournisseur de contenus par l'intermédiaire d'un réseau, **caractérisé en ce que** ledit procédé comprend les étapes suivantes :
détection d'une défaillance dans la réception des deuxièmes données ;
suite à la détection de la défaillance dans la réception des deuxièmes données, resynchronisation des premières données extraites du support d'enregistrement avec les deuxièmes données reçues du serveur fournisseur de contenus par l'intermédiaire du réseau, par
calcul d'une valeur de décalage pour les deuxièmes données afin de lancer la resynchronisation ;
envoi au serveur fournisseur de contenus d'une demande de transmission des deuxièmes données correspondant à la valeur de décalage calculée ;
resynchronisation des deuxièmes données transmises en réponse à la demande avec les premières données extraites du support d'enregistrement ; et
reproduction des premières données en synchronisation avec les deuxièmes données,
les premières données comprenant des données audio/vidéo et les deuxièmes données comprenant des données de contenus associées aux premières données, et
l'étape de resynchronisation étant exécutée sur la base d'informations pour la synchronisation ou la resynchronisation incluses dans une partie d'en-tête des deuxièmes données, lesdites informations comprenant des informations sur le débit de données des deuxièmes données et/ou des informations de taille des deuxièmes données.

2. Procédé selon la revendication 1, où l'étape de détection comprend la détection d'une défaillance dans la réception des deuxièmes données en raison d'une déconnexion ou d'un retard de transmission des deuxièmes données par l'intermédiaire du réseau.

3. Procédé selon la revendication 1, comprenant en outre l'étape :
d'exécution de la resynchronisation, les premières données étant reproduites pendant la resynchronisation, et les deuxièmes données étant mises en sommeil et non reproduites.

4. Procédé selon la revendication 1, comprenant en outre l'étape :
d'exécution de la resynchronisation, les premières données étant reproduites pendant la resynchronisation, et un segment précédent des deuxièmes données étant reproduit.

5. Procédé selon la revendication 1,
où la valeur de décalage des deuxièmes données aptes à resynchronisation est calculée par ajout du temps de lecture des premières données à une grandeur temporelle définie et multiplication du résultat par le nombre d'octets par seconde des deuxièmes données, la grandeur temporelle définie étant fixée comme valeur temporelle proportionnelle à une vitesse de lecture des premières données et à un débit de transfert de données sur le réseau.

6. Dispositif de reproduction d'informations de contenu, comprenant :
un lecteur (15) prévu pour reproduire de premières données extraites d'un support d'enregistrement (400) en synchronisation avec des deuxièmes données reçues d'un serveur fournisseur de contenus (300) par l'intermédiaire d'un réseau ; et
un processeur (12) prévu pour détecter une défaillance dans la réception des deuxièmes données, et, suite à la détection de la défaillance dans la réception des deuxièmes données, resynchroniser les premières données extraites du support interactif avec les deuxièmes données reçues du serveur fournisseur de contenus (300) par l'intermédiaire du réseau, et, après un délai de resynchronisation, entraîner le lecteur à poursuivre la reproduction des premières données en synchronisation avec les deuxièmes données,
les premières données comprenant des données audio/vidéo et les deuxièmes données comprenant des données de contenus associées aux premières données, et
le processeur (12) étant prévu pour exécuter la resynchronisation sur la base d'informations pour la synchronisation ou la resynchronisation incluses dans une partie d'en-tête des deuxièmes données, lesdites informations comprenant des informations sur le débit de données des deuxièmes données et/ou des informations de taille des deuxièmes données, par calcul d'une valeur de décalage pour les deuxièmes données afin de lancer la resynchronisation ; envoi au serveur fournisseur de contenus (300) d'une demande de transmission des deuxièmes données correspondant à la valeur de décalage calculée ; et resynchronisation des deuxièmes données transmises en réponse à la demande avec les premières données extraites du support d'enregistrement.

7. Dispositif selon la revendication 6, où le processeur (12) est prévu pour détecter une défaillance dans la réception des deuxièmes données en raison d'une déconnexion ou d'un retard de transmission des deuxièmes données par l'intermédiaire du réseau.

8. Dispositif selon la revendication 6, où le processeur (12) est prévu pour exécuter la resynchronisation, et commander la reproduction des premières données, et la mise en sommeil et la non reproduction des deuxièmes données pendant le délai de resynchronisation.

9. Dispositif selon la revendication 6, où le processeur (12) est prévu pour exploiter un temps de lecture des premières données extraites du support d'enregistrement et le numéro d'octets par seconde des deuxièmes données lors du calcul de la valeur de décalage,
la valeur de décalage des deuxièmes données aptes à resynchronisation est calculée par ajout du temps de lecture des premières données à une grandeur temporelle définie et multiplication du résultat par le nombre d'octets par seconde des deuxièmes données, la grandeur temporelle définie étant fixée comme valeur temporelle proportionnelle à une vitesse de lecture des premières données et à un débit de transfert de données sur le réseau.
